# EUROPEAN PATENT SPECIFICATION

(11) **EP 1 851 033 B1**
(45) Date of publication and mention of the grant of the patent: **07.05.2008**
(21) Application number: 05819026.5
(22) Date of filing: 12.12.2005
(51) Int. Cl.: B29C 55/06, B29C 35/06

(54) **APPARATUS FOR STRETCHING EXTRUDED PLASTIC STRIPS, FOR EXAMPLE OF POLYPROPYLENE OR OF POLYETHYLENE, FOR THE PRODUCTION OF STRAPS, RAFFIA OR OTHER TYPES OF STRIPS**
VORRICHTUNG ZUM STRECKEN VON EXTRUDIERTEN KUNSTSTOFFBÄNDERN, ZUM BEISPIEL AUS POLYPROPYLEN ODER POLYETHYLEN, ZUR HERSTELLUNG VON GURTEN, RAFFIA ODER ANDEREN BANDARTEN
APPAREIL A ETIRER DES BANDES DE PLASTIQUE EXTRUDE, NOTAMMENT DE POLYPROPYLENE OU DE POLYETHYLENE, POUR LA PRODUCTION DE BRIDES, DE RAPHIA OU D'AUTRES TYPES DE BANDES

(30) Priority: 23.12.2004 IT BO20040791
(43) Date of publication of application: 07.11.2007
(73) Proprietor: S.I.M.A.Società Industrie Meccaniche Affini a r.l, 40056-Crespellano (IT)
(72) Inventor: BOCCAFOGLI, Sergio, I-40128 BOLOGNA (IT)
(74) Representative: Jorio, Paolo
(86) International application number: PCT/EP2005/056704
(87) International publication number: WO 2006/067066

(56) References cited:
- EP-A- 1 057 614
- WO-A-03/087200
- US-A- 5 017 323

## Description

Apparatuses for the production of straps, raffia or other types of tapes or strips, usually of polypropylene and/or of polyethylene, hereinafter called "strips" for simplicity, are at present characterized by a considerable length, with stretching ovens with a length of six or more metres, and so is very unwieldy, very expensive and difficult to operate, especially when we want to change from one type of product to another, for example from raffia to straps or to other types of strips.

WO-A-03087200 discloses an apparatus according to the preamble of claim 1.

The invention aims to overcome these limitations of the prior art, with an apparatus as in the appended claims, having great versatility of application, and being very easy to operate, and with very compact dimensions with respect to length relative to the apparatuses of the known type and therefore of lower cost, the characteristics and advantages of which will become clear from the following description of a preferred embodiment, illustrated purely as a non-limiting example, in the diagrams in the two attached sheets of drawings, in which:
- Fig. 1 is a side view of the apparatus, with the stretching oven shown in longitudinal section, and in the embodiment with single, direct path of the material that is to be stretched;
- Fig. 2 shows a front view of the oven of Fig. 3, in the closed operating condition and in the open condition at rest;
- Figs. 3, 4, 5 and 6 show the stretching oven in longitudinal section as in Fig. 1 and according to as many embodiments.

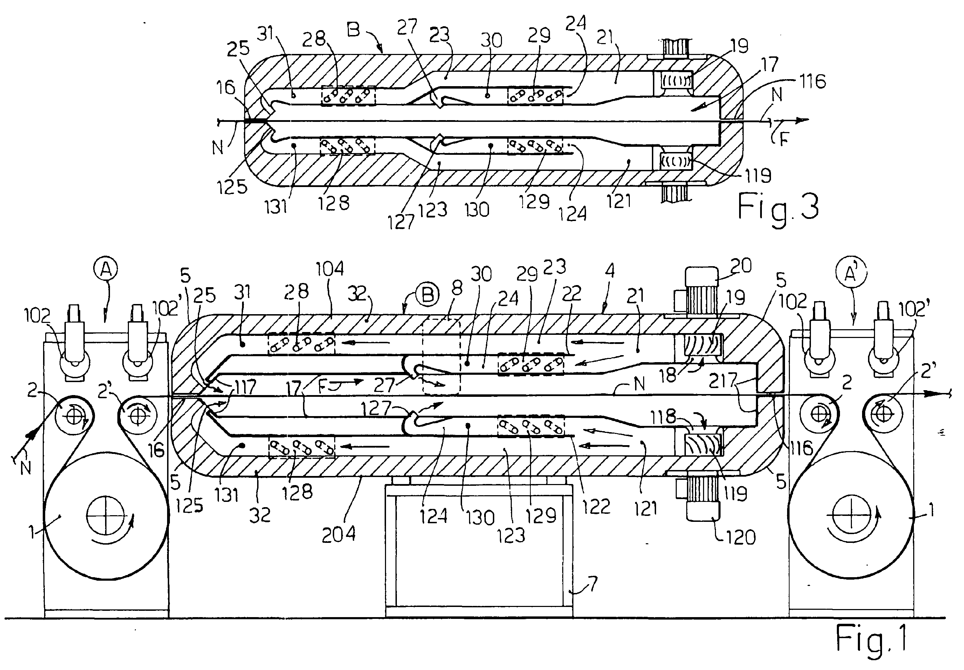

In Fig. 1, N indicates one of the strips of plastic material placed side by side, received from any known type of extrusion system for example on a cooled roller or in a tank of cooling liquid and with subsequent drying means, whereas A and A' indicate the means with motorized pulling rollers on which the said strips are returned so that they can be fed with the correct tension through an interposed oven B where said strips are heated to the temperature required for making them sufficiently plastic so that they can be stretched by an appropriate difference in speed between said pulling groups A and A', with the downstream group A' running at a suitably higher speed than the upstream group A. The pulling groups A and A' can be of any known type or preferably are of the type shown in the drawings and protected by a separate patent application in the name of the same applicant, characterized by a compact design and an ample linear surface of contact with the strips N. In these groups, the intermediate roller that is positioned at the vertex of the imaginary triangle, for example the bottom roller 1, has a diameter greater than the sum of the diameters of the other two upper rollers 2, 2' which are advantageously of equal diameter, the whole in such a way that the overall dimensions of the entire pulling group correspond substantially to the diameter of the larger roller 1. Good results were obtained for example using a middle roller 1 approx. 650 mm in diameter and end rollers 2, 2' approx. 240 mm in diameter. The overall dimension of each pulling group A, A' is thus only 650 mm and the surface of linear contact with the strips of said groups A, A', bearing in mind that the useful surface of contact of the middle roller 1 is about ¾ of the total circumference of said roller, is approx. 2300 mm, as against 1500 mm in the prior art. Rollers 1, 2, 2' of groups A and A' are driven by electric motors with torque control, the side surface of said rollers can be chromium-plated or coated with ceramic, and some of the rollers, especially those of larger diameter 1, can be temperature-controlled by means of forced circulation of a heating fluid in them, for example for the upstream group A, and of a cooling fluid for the downstream group A', by known means. Rollers 2, 2' are assisted by moving pressure rollers 102, 102' with a working surface of Vulcolan or some other suitable material, driven by respective servomechanisms, to keep strips N properly directed onto the pulling rollers in question.

The improvements that the invention proposes relate primarily to the stretching oven B, which is constructed with a length that is substantially halved relative to that of the known ovens, with a value in the range 3000-3500 mm, for example about 3300 mm, so that the overall length of the apparatus made up of groups A-B-A' according to the invention reaches a value of about 4600 mm, as against about 7500 mm in the prior art.

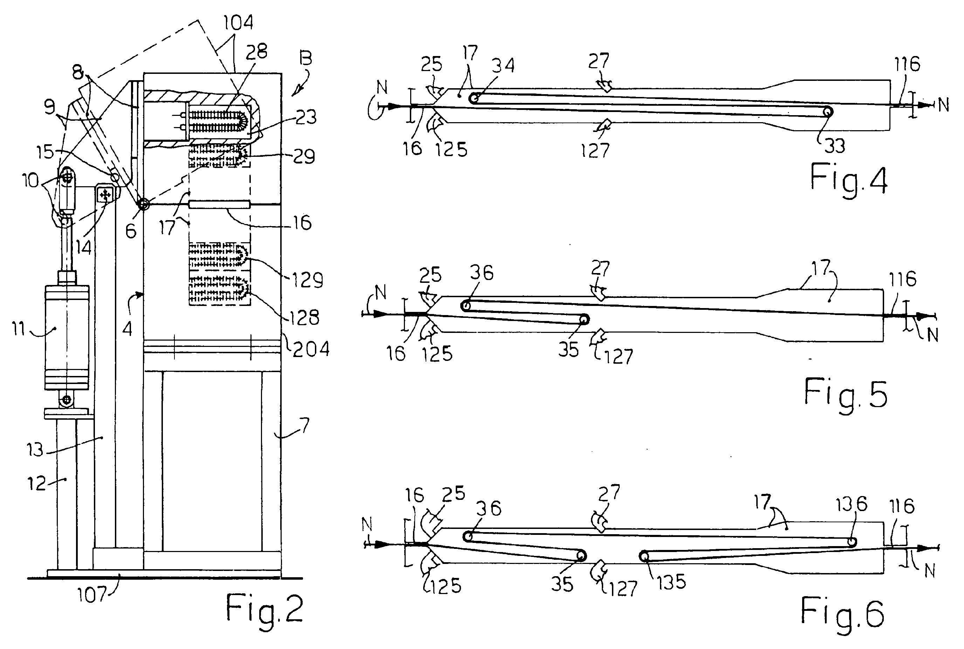

Referring to Figs. 1 and 2, it can be seen that oven B comprises a structure 4 of parallelepiped shape, with the corner zones 5 suitably rounded and formed by the superposition of two structures that are parallelepiped-shaped and substantially specular 104, 204 hinged together like a book on a longitudinal side by suitable hinging means 6 and, of said structures, the lower one 204 is fixed on a base 7, whereas the upper one 104 is provided, in the middle portion of the wall with hinge 6 at the bottom, with a reinforcing plate 8 on which a triangular gusset 9 is fixed in shear, hinged with the lower vertex at 10 to the rod of a linear actuator 11 with its body fixed to a column 12 which is in turn fixed to a bottom, lateral extension 107 of base 7, and a column 13 is also fixed to said extension, ending in an upper forked end and with opposite holes, provided with a linear actuator 14 with a bolt which, when the upper portion 104 of the oven is raised as illustrated in Fig. 2 with dashed lines, engages in a hole 15 in gusset 9 which in its turn goes into the top fork of column 13, thus providing stable and secure locking of said structure 104 of the oven in the open position which allows the operator to carry out the initial positioning of the strips along said oven.

When the two structures 104 and 204 of the oven are one on top of the other, they are arranged internally in mirror fashion having at their ends two doors 16, 116 that are identical and are aligned with each other, flat, horizontal and of rectangular cross-section, for example with width of 200 mm, about 20 mm high and about 170 mm deep. F indicates the direction in which the strips travel through oven B in question. Doors 16, 116 are positioned at the ends of a longitudinal inner chamber 17 of the oven, which over its length of about 2150 mm is about 200 mm wide, is about 220 mm high and ends with an expansion section which has the same width as the upstream section but a greater height, for example a height of about 330 mm. The initial section of chamber 17 is abutted to the entrance door 16 with a conformation joined by means of inclined walls 117, whereas the final section, of greater height than said chamber 17, is abutted to the exit door 116 with vertical walls 217. On the bottom and top walls of the final, raised section of chamber 17, in a centred position, there are circular window openings 18, 118 which abut to the axial suction mouths of centrifugal fans 19, 119 with identical characteristics, driven by motors 20, 120 outside of the oven and whose volute discharges in ducts 21, 121 positioned above and below the initial portion of the final section of greater height of the treatment chamber 17 and in which, owing to said fans, an air flow of about 1500 m3/h can circulate. Ducts 21, 121 join in the section of smaller height of chamber 17, with a height of about 215 mm and then each is divided into two superposed channels with substantially equal height, about 107.5 mm, by means of horizontal dividing walls 22, 122, so as to form pairs of channels 23, 24 and 123, 124, the first of which travel the whole length of the oven and end in chicane sections which open onto the inclined entrance walls 117 of the treatment chamber, with mouths 25, 125 with width of 200 mm and height of about 40 mm, having an angle of incidence with the horizontal of about 45º and on which fins can be provided (not shown) optionally with adjustable orientation, such that the air discharged from said mouths, with a velocity of about 30-35 m/s, when the oven is in operation, should not have a tendency to create eddy effects by the entrance door 16, but should perhaps force a little air from the inside to the outside through said door 16. Channels 24, 124 are shorter than the external channels 23, 123 and end in mouths 27, 127 substantially as a chicane, which open inside treatment chamber 17 with an angle of incidence with the horizontal of about 45º, which have the same size as mouths 25, 125 and are about 1125 mm away from them. The distance between these intermediate mouths and the suction mouths 18, 118 of fans 19, 119, is about 1560 mm. In the intermediate section of the external channels 23, 123, i.e. between mouths 25, 27 and 125, 127, batteries of shielded electric heating resistances 28, 128, with identical characteristics, are provided, where each battery comprises for example three U-shaped electric resistances, with external fins, with width between axes of about 75 mm, positioned transversely and with the correct inclination in said channels, each having a power of about 1200 W and spaced about 120 mm apart. Internal channels 24, 124 are arranged in the initial portion of the identical batteries of electric resistances 29, 129. Downstream from each battery of resistances, respective temperature sensors 30, 31 and 130, 131 are provided, connected to means, not shown, with which it is possible to control and regulate, selectively, the operation of said batteries of resistances, to ensure that the necessary temperature for stretching the strips being produced is established in treatment chamber 17. The strips N enter treatment chamber 17 via the entrance door 16 and here they are first treated with the hot air that is discharged in parallel flow from mouths 25, 125 and then, a little more than a metre from the entrance, they are treated with hot air at the correct temperature that is discharged, again in parallel flow, from the intermediate mouths 27, 127, so that during their travel through chamber 17 the strips themselves are maintained at a temperature that affects them progressively in depth and uniformly distributed and as required for the desired stretching, also on the basis of the correct ratio of speeds that is established between the upstream pulling group A and the downstream pulling group A'. When working with strips of small size, for example for making raffia, said strips can be fed through the oven described at a speed of about 300 m/min and can undergo an average stretching of about 1-9, 1-10. Owing to the injection of heat that is effected, not only through the entrance mouths 25, 125, but also through the intermediate mouths 27, 127, the strips are submitted to a uniformly distributed thermal treatment which ensures they have optimum reaction to stretching, even on a path of limited length, in the specific case about 3500 mm long. The hot air that reaches the widened end portion of chamber 17 loses velocity and is soon recirculated through fans 19, 119. The entire outer portion of the oven indicated with cross-hatching and with 32, is suitably insulated to prevent heat loss. It can be seen from Fig. 2 that the intermediate heating batteries 29, 129 are in an optimum position for preheating, by conduction and by radiation, both the air recirculating through external channels 23, 123 and the air circulating in the end portion of treatment chamber 17. The heating batteries 28, 128 can also be employed to give up a better part of their heat to treatment chamber 17, if they are arranged in a position closer to the bottom wall and to the top wall of said chamber, as illustrated in the embodiment in Fig. 3.

Through suitable side openings, not shown, provided on the sides of structures 104 and 204 of the oven, it will be possible to position, transversely in treatment chamber 17, rollers for conveying the strips that are to be stretched, to ensure that, inside the oven, they travel over a path in a broken line, with length greater than the length of the oven itself, in order to undergo the heat treatment required for stretching, especially when said strips are of large size, for example for the production of straps. The arrangement in Fig. 4 shows a possible solution that envisages a first motorized roller 33, positioned in the end portion of chamber 17, over which the strips pass for a first time without substantially undergoing stretching, and a second roller 34 positioned in the initial portion of said chamber 17, over which the strips pass for a second time and said roller can be fixed or it can be motorized, the whole in such a way that said strips are subjected to the desired stretching on passing beyond roller 34 or partly also on passing between roller 33 and roller 34. To ensure that the intermediate blowing mouths 27, 127 act upon just one branch of strips and not on several superposed branches, as in the solution in Fig. 4, it is possible to provide the solution in Fig. 5 which envisages a first return roller 35 before the intermediate mouths 27, 127 and a second return roller 36 in the initial portion of chamber 17, and in this case as well, roller 35 is motorized at the correct speed, and roller 36 is fixed or it too is motorized at a speed equal to or greater than that of the first roller 35. In the solution in Fig. 6, inside the treatment chamber there are instead at least four rollers, two of which 35, 36 are arranged as in the solution in Fig. 5, whereas a third roller 136 is provided in the end portion of chamber 17 and a fourth roller 135 is provided immediately downstream of the intermediate mouths 27, 127, said rollers being suitably motorized at the correct speed, apart from roller 36 which can be fixed or it too can be motorized at low speed.

It is to be understood that the oven described must also be regarded as protected if the strips are made to pass through it in the opposite direction to that considered above, i.e. entering from door 116 and leaving from door 16, so that the intake of the circulating fans 19, 119 is arranged to correspond with the new door for strip entry and so that the hot air passes over said strips in counterflow.

## Claims

1. Apparatus, suitable for stretching treatment of extruded plastic strips, for example of polypropylene and/or of polyethylene, for the production of straps, raffia or other types of strips, of the type that comprises a first group (A) with motorized pulling rollers for longitudinal feed of strips (N) received from any known system for extrusion, for example on a cooled roller or in a tank of cooling liquid and with subsequent drying means, which comprises a subsequent oven (B) where said strips are heated to the temperature required for them to be plasticized and stretched by a second group of rollers (A') positioned at the exit of said oven and which runs at a higher speed than the upstream pulling group (A), **characterized in that** the stretching oven (B) is of a limited length with blowing of hot air inside it for plasticization of the strips to be stretched, with first opposed blowing mouths (25, 125) arranged at one end of the treatment chamber (17) of said oven, preferably near the door (16) by which the strips to be treated enter, and with second opposing blowing mouths (27, 127) always operating in parallel flow, in an intermediate portion of said treatment chamber, which at the other end, by the exit door (116), has opposing pairs of suction mouths connected to fans (19, 119) which collect the hot air from said treatment chamber and carry it to said admission mouths (25, 125, 27, 127) through channels in which heating units (28, 128, 29, 129) are arranged, controlled selectively by suitable temperature sensors (30, 31, 130, 131) and by suitable regulating and controlling means.

2. Apparatus according to Claim 1, in which the stretching oven (B) is of a limited length, between 3000 and 4000 mm, for example of about 3300 mm and is provided with suitable thermal insulation (32) against the exterior.

3. Apparatus according to the preceding claims, in which the two entrance and exit doors (16, 116) of the treatment chamber (17) are identical and are aligned with one another, are flat and horizontal and have a rectangular cross-section, for example with width of about 200 mm, height of about 20 mm and depth of about 170 mm and the treatment chamber (17) into which said doors open is horizontal and for the length of about 2150 mm has width of about 200 mm and height of about 220 mm and ends in an expansion section having the same width as the upstream section but a greater height, for example about 330 mm, with the initial section of said chamber (17) being abutted to the entrance door (16) with a conformation provided by walls (117) inclined at 45º, whereas the final section, of greater height, of said chamber (17), is abutted to the exit door (116) with vertical walls (217).

4. Apparatus according to Claim 3, in which, on the bottom and top walls of the final, raised section of the treatment chamber (17), in a centred position, there are circular window openings (18, 118), abutting to the axial suction mouths of centrifugal fans (19, 119) with identical characteristics, driven by motors (20, 120) outside of the oven and whose volute discharges into ducts (21, 121) positioned above and below the initial portion of the final section, of greater height, of said treatment chamber (17), in which, owing to said fans, the correct amount of air can circulate, for example about 1500 m3/h.

5. Apparatus according to Claim 4, in which said ducts (21, 121) join together in the section of lower height of the treatment chamber (17), with a height of about 215 mm and then each is divided into two superposed channels of substantially equal height, about 107.5 mm, by horizontal dividing walls (22, 122), so as to form pairs of longitudinal, mutually superposed channels (23, 24 and 123, 124), the first of which (23, 123) travel the whole length of the oven and end in sections with a chicane which open on the inclined entrance walls (117) of the treatment chamber, with blowing mouths (25, 125) about 200 mm wide and about 40 mm high, having an angle of incidence with the horizontal of about 45º and on which fins can optionally be provided, optionally adjustable in orientation, such that the air discharged from said mouths, with a velocity of for example about 30-35 m/s, when the oven is operating in normal conditions, would not have a tendency to create eddy effects at the entrance door (16), but should perhaps force a little air from the inside to the outside through said door 16, it being envisaged that the other channels (24, 124) should be shorter than the aforesaid external channels (23, 123) and should end in mouths (27, 127) substantially as a chicane, also opening inside treatment chamber (17) with an angle of incidence with the horizontal of about 45º, having the same size as the upstream mouths (25, 125) and about 1125 mm away from them, the distance between said intermediate mouths and the suction mouths of the fans (19, 119) being about 1560 mm.

6. Apparatus according to Claim 5, in which, in the intermediate section of said external channels (23, 123), the section between the pairs of blowing mouths (25, 27 and 125, 127), batteries of shielded electric heating resistances (28, 128), with identical characteristics, are provided, where each battery comprises for example three U-shaped shielded electric resistances, with external fins, with width between axes of about 75 mm, positioned transversely and with the correct inclination in said channels, each for example having a power of about 1200 W and spaced about 120 mm apart, with identical batteries of electric resistances (29, 129) being arranged in the initial portion of the internal channels (24, 124) and respective temperature sensors (30, 31 and 130, 131) being provided downstream from each of the said batteries of resistances, and connected to means, not shown, with which it is possible to control and regulate, selectively and automatically, the operation of said batteries of electric resistances, in order for the temperature required for stretching the strips being produced to be established in the treatment chamber (17).

7. Apparatus according to the preceding claims, **characterized in that** when working with strips of small size, for example for producing raffia, said strips can be fed through the aforesaid oven (B) at a speed of about 300 m/min and can undergo an average stretching of about 1-9, 1-10, this owing to the injection of heat that is made not only through the entrance blowing mouths (25, 125), but also through intermediate blowing mouths (27, 127), subjecting the strips to a uniformly distributed heat treatment which ensures their optimum reaction to stretching, even on a path of limited length, in the specific case about 3500 mm long.

8. Apparatus according to the preceding claims, in which the intermediate heating batteries (29, 129) are in a position such that they can also preheat, by conduction and by radiation, the air that circulates through the external and adjoining channels (23, 123) as well as the air that circulates in the end portion of the treatment chamber (17).

9. Apparatus according to the preceding claims, **characterized in that**, according to a design embodiment, the heating batteries (28, 128) of the external channels (23, 123) can also be employed for giving up a better part of their heat to the treatment chamber (17), if they are arranged in a position closer to the bottom wall and to the top wall of said chamber.

10. Apparatus according to the preceding claims, **characterized in that**, through suitable side openings provided in the sides of oven (B), the possibility is provided of positioning, transversely in the treatment chamber (17) of said oven, rollers (33, 34, or 35, 36, or 35, 36, 136, 135) partly fixed and partly motorized or all motorized at the correct speed, on which the strips to be stretched are propelled, so that inside the oven they follow a broken or zigzag path, of length greater than the length of the oven itself, in order to undergo the heat treatment required for stretching even when said strips are of large section, for example for the production of straps.

11. Apparatus according to one or more of the preceding claims, **characterized in that** the oven (B) comprises a structure (4) of parallelepiped shape, with suitable insulation (32) against the exterior, with the end corner zones (5) suitably rounded and formed by the superposition of two structures that are parallelepiped-shaped and substantially specular (104, 204) hinged together like a book on a longitudinal side by suitable hinging means (6) and, of said structures, the lower one (204) is fixed on a base (7), whereas the upper one (104) is provided, in the middle portion of the wall with hinge (6) at the bottom, with a reinforcing plate (8) on which a triangular gusset (9) is fixed in shear, hinged with the lower vertex (10) to the rod of a linear actuator (11) with its body fixed to a column (12) which is in turn fixed to a bottom, lateral extension (107) of said base (7), and a column (13) is also fixed to said extension, ending in an upper forked end and with opposite holes, provided with a linear actuator (14) with a bolt which, when the upper portion (104) of the oven is inclined upwards and is raised from the lower structure (204), engages in a hole (15) in said gusset (9), so as to provide stable and secure locking of said structure (104) of the oven in the open position which allows the operator to carry out the initial positioning of the strips along said oven.

12. Apparatus according to Claim 1, **characterized in that** the strips (N) can be made to pass through the oven (B) in the opposite direction to that considered previously, i.e. with entrance from the aforesaid exit door (116) and with exit from the aforesaid entrance door (16), so that the suction of the circulating fans (19, 119) is arranged to correspond to the new entrance door (116) for the strips and so that said strips have hot air flowing over them in counterflow.

## Patentansprüche

1. Vorrichtung, die für die Streckbehandlung von extrudierten Kunststoffbändern, beispielsweise aus Polypropylen und/oder aus Polyethylen, für die Herstellung von Gurten, Raffia oder anderen Arten von Bändern geeignet ist, wobei es sich bei der Vorrichtung um eine von dem Typ handelt, die folgendes aufweist:
eine erste Gruppe (A) mit motorisch betriebenen Zugrollen für die Zuführung von Bändern (N) in Längsrichtung, die von einem beliebigen bekannten System für die Extrusion, beispielsweise auf einer gekühlten Walze oder in einem Behälter mit Kühlflüssigkeit und mit einer nachfolgenden Trocknungseinrichtung, empfangen werden, die einen nachfolgenden Ofen (B) aufweist, in dem die Bänder auf die zum Plastifizieren von diesen erforderliche Temperatur erwärmt werden und durch eine zweite Gruppe von Walzen (A') gestreckt werden, die am Ausgang des Ofens positioniert sind und mit einer höheren Drehzahl laufen als die stromaufwärtige Gruppe (A) zum Ziehen,
**dadurch gekennzeichnet,**
**daß** der Streckofen (B) eine begrenzte Länge aufweist und heiße Luft in diesen eingeblasen wird, um die zu streckenden Bänder zu plastifizieren, wobei erste einander gegenüberliegende Blasöffnungen (25, 125) an dem einen Ende der Behandlungskammer (17) des Ofens angeordnet sind, vorzugsweise in der Nähe des Tors (16), durch das hindurch die zu behandelnden Bänder eintreten, und
wobei zweite einander gegenüberliegende Blasöffnungen (27, 127), die stets in einer parallelen Strömung arbeiten, in einem mittleren Bereich der Behandlungskammer angeordnet sind, die an dem anderen Ende neben dem Austrittstor (116) einander gegenüberliegende Paare von Saugöffnungen aufweist, die mit Gebläsen (19, 119) verbunden sind, welche die heiße Luft aus der Behandlungskammer sammeln und diese durch Kanaleinrichtungen, in denen Heizeinheiten (28, 128, 29, 129) angeordnet sind, zu den Eintrittsöffnungen (25, 125, 27, 127) befördern, wobei sie mit geeigneten Temperatursensoren (30, 31 , 130, 131) sowie mit geeigneten Regulier- und Steuereinrichtungen gesteuert werden.

2. Vorrichtung nach Anspruch 1,
wobei der Streckofen (B) eine begrenzte Länge von 3000 mm bis 4000 mm, beispielsweise etwa 3000 mm, aufweist und mit einer geeigneten Wärmeisolierung (32) gegenüber der äußeren Umgebung versehen ist.

3. Vorrichtung nach einem der vorhergehenden Ansprüche,
wobei das Eintritts- und das Austrittstor (16, 116) der Behandlungskammer (17) beide miteinander identisch sind und miteinander ausgerichtet sind sowie flach und horizontal ausgebildet sind und einen rechteckigen Querschnitt aufweisen, beispielsweise mit einer Breite von etwa 200 mm, einer Höhe von etwa 20 mm und einer Tiefe von etwa 170 mm, und wobei die Behandlungskammer (17), in die hinein sich die Toröffnungen öffnen, horizontal ist und über die Länge von etwa 2150 mm eine Breite von etwa 200 mm und eine Höhe von etwa 220 mm aufweist sowie in einem Erweiterungsbereich endet, der die gleiche Breite wie der stromaufwärtige Bereich, jedoch eine größere Höhe von beispielsweise etwa 330 mm aufweist, wobei der Eingangsbereich der Kammer (17) in übereinstimmender Weise an das Eintrittstor (16) angrenzt, indem die Wände (117) unter einem Winkel von 45° geneigt sind, während der eine größere Höhe aufweisende abschließende Bereich der Kammer (17) mit vertikalen Wänden (217) an das Austrittstor (116) angrenzt.

4. Vorrichtung nach Anspruch 3,
wobei an der unteren Wand und der oberen Wand des abschließenden, hochgezogenen Bereichs der Behandlungskammer (17) in einer zentralen Position kreisförmige Fensteröffnungen (18, 118) vorgesehen sind, die an die axialen Saugöffnungen der Zentrifugalgebläse (19, 119) mit identischen Eigenschaften angrenzen, die von Motoren (20, 120) außerhalb des Ofens angetrieben werden und deren Spiralform in Kanäle (21, 121) ausleitet, die über und unter dem Anfangsbereich des abschließenden Bereichs mit größerer Höhe der Behandlungskammer (18) angeordnet sind und in denen aufgrund der Gebläse die korrekte Menge an Luft zikulieren kann, beispielsweise etwa 1500 m³/h.

5. Vorrichtung nach Anspruch 4,
wobei die Kanäle (21, 121) in dem Bereich mit der geringeren Höhe der Behandlungskammer (17), der eine Höhe von etwa 215 mm hat, miteinander verbunden sind und anschließend durch horizontale Trennwände (22, 122) jeweils in zwei einander überlagerte Kanäle mit im wesentlichen gleicher Höhe von etwa 107,5 mm geteilt sind, so daß Paare von in Längsrichtung verlaufenden, einander überlagerten Kanälen (23, 24 und 123, 124) gebildet sind, von denen sich die ersten (23, 123) über die gesamte Länge des Ofens erstrecken und in Bereichen mit einer Schikanenkrümmung enden, die sich in die geneigten Eintrittswände (117) der Behandlungskammer öffnen, wobei Blasöffnungen (25, 125) mit einer Breite von etwa 200 mm und einer Höhe von etwa 40 mm einen Einfallswinkel zur Horizontalen von etwa 45° aufweisen und wahlweise mit Rippen versehen sein können, deren Orientierung wahlweise einstellbar sein kann, so daß die von den Öffnungen abgegebene Luft mit einer Geschwindigkeit von beispielsweise etwa 30 bis 35 m/s, wenn der Ofen unter normalen Betriebsbedingungen arbeitet, keine Tendenz zur Erzeugung von Wirbeleffekten an dem Eintrittstor (16) hat, jedoch möglicherweise etwas Luft von innen durch das Tor (16) hindurch nach außen drängt, wobei vorgesehen ist, daß die anderen Kanäle (24, 124) kürzer sein sollten als die vorgenannten äußeren Kanäle (23, 123) und in den Öffnungen (27, 127) im wesentlichen in Form einer Schikanenkrümmung enden sollten, wobei sie sich ebenfalls mit einer Einfallswinkel von etwa 45° zu der Horizontalen in die Behandlungskammer (17) hinein öffnen und die gleiche Größe wie die stromaufwärtigen Öffnungen (25, 125) aufweisen und von diesen etwa 1125 mm entfernt sind, wobei die Distanz zwischen den zwischengeordneten Öffnungen und den Saugöffnungen der Gebläse (19, 119) etwa 1560 mm beträgt.

6. Vorrichtung nach Anspruch 5,
wobei in dem mittleren Bereich der äußeren Kanäle (23, 123) in dem Bereich zwischen den Paaren von Blasöffnungen (25, 27 und 125, 127) Gruppen von abgeschirmten elektrischen Heizwiderständen (28, 128) mit identischen Eigenschaften vorgesehen sind, wobei jede Gruppe beispielsweise drei U-förmige abgeschirmte elektrische Widerstände mit äußeren Rippen mit einer Breite zwischen den Achsen von etwa 75 mm aufweist, die quer sowie mit der korrekten Neigung in den Kanälen angeordnet sind, wobei jeder eine Leistung von beispielsweise etwa 1200 W aufweist und diese mit einer gegenseitigen Beabstandung von etwa 120 mm angeordnet sind, wobei identische Gruppen von elektrischen Widerständen (29, 129) in dem Anfangsbereich der inneren Kanäle (24, 124) angeordnet sind und jeweilige Temperatursensoren (30, 31 und 130, 131) stromabwärts von jeder Gruppe von Widerständen vorgesehen sind und mit nicht dargestellten Einrichtungen verbunden sind, mit denen der Betrieb der Gruppen von elektrischen Widerständen selektiv und automatisch gesteuert und reguliert werden kann, damit die Temperatur, die zum Strecken der in der Herstellung befindlichen Bänder erforderlich ist, in der Behandlungskammer (17) erzeugt werden kann.

7. Vorrichtung nach einem der vorhergehenden Ansprüche,
**dadurch gekennzeichnet,**
**daß** beim Bearbeiten von Bändern mit geringer Größe, beispielsweise für die Herstellung von Raffia, die Bänder mit einer Geschwindigkeit von etwa 300 m/min durch den genannten Ofen (B) hindurchbefördert werden können und eine durchschnittliche Streckung von etwa 1 bis 9, 1 bis 10 erfahren können, und zwar aufgrund des Einblasens von Wärme nicht nur durch die Eintrittsblasöffnungen (25, 125), sondern auch durch die zwischengeordneten Blasöffnungen (27, 127), so daß die Bänder einer gleichmäßig verteilten Wärmebehandlung unterzogen werden und dadurch ihre optimale Reaktion auf das Strecken selbst auf einer Bahn mit begrenzter Länge sichergestellt wird, die im vorliegenden speziellen Fall etwa 3500 mm beträgt.

8. Vorrichtung nach einem der vorhergehenden Ansprüche,
wobei sich die zwischengeordneten Heizgruppen (29, 129) in einer derartigen Position befinden, daß auch ein Vorwärmen von diesen möglich ist, und zwar durch Leitung und Abstrahlung der Luft, die durch die äußeren und angrenzenden Kanäle (23, 123) zirkuliert, sowie der Luft, die in dem Endbereich der Behandlungskammer (17) zirkuliert.

9. Vorrichtung nach einem der vorhergehenden Ansprüche,
**dadurch gekennzeichnet,**
**daß** bei einer exemplarischen Ausführungsform die Heizgruppen (28, 128) der äußeren Kanäle (23, 123) auch zum Abgeben eines größeren Teils ihrer Wärme an die Behandlungskammer (17) verwendet werden können, wenn sie in einer Position näher bei der unteren Wand und der oberen Wand der Kammer angeordnet sind.

10. Vorrichtung nach einem der vorhergehenden Ansprüche,
**dadurch gekennzeichnet,**
**daß** durch geeignete Seitenöffnungen, die in den Seiten des Ofens (B) vorhanden sind, die Möglichkeit besteht, teilweise feste und teilweise motorisch betriebene oder allesamt motorisch betriebene Rollen (33, 34 oder 35, 36 oder 35, 36, 136, 135) mit der richtigen Geschwindigkeit quer in der Behandlungskammer (17) der Ofens anzuordnen, wobei auf den Rollen die zu streckenden Bänder vorwärtsbewegt werden, so daß sie im Inneren des Ofens einer fragmentierten oder zickzackförmigen Bahn mit einer Länge folgen, die größer ist als die Länge des eigentlichen Ofens, damit sie die zum Strecken erforderliche Wärmebehandlung erfahren, selbst wenn die Bänder einen großen Querschnitt aufweisen, beispielsweise für der Fertigung von Gurten.

11. Vorrichtung nach einem oder mehreren der vorhergehenden Ansprüche,
**dadurch gekennzeichnet,**
**daß** der Ofen (B) eine Konstruktion (4) mit parallelepipedförmiger Gestalt aufweist, der eine geeignete Isolierung (32) gegenüber der äußeren Umgebung aufweist, wobei die am Ende befindlichen Eckzonen (5) geeignet abgerundet sind, sowie dadurch gebildet ist, daß zwei parallelepipedförmige und im wesentlichen spiegelbildliche Konstruktionen (104, 204) nach Art eines Buches an einer Längsseite durch eine geeignete Gelenkeinrichtung (6) gelenkig miteinander verbunden sind, wobei von diesen Konstruktionen die untere (204) auf einer Basis (7) festgelegt ist, während die obere (104) in dem mittleren Bereich der Wand, an der sich unten die Gelenkeinrichtung (6) befindet, mit einer Verstärkungsplatte (8) versehen ist, an der eine dreieckige Stützplatte (9) scherbefestigt ist, die mit dem unteren Scheitel (10) mit der Stange eines Linearbetätigers (11) gelenkig verbunden ist, dessen Körper an einer Säule (12) befestigt ist, die wiederum an einer unteren seitlichen Verlängerung (107) der Basis (7) befestigt ist,
wobei an der Verlängerung auch eine Säule (13) befestigt ist, die in einem oberen gegabelten Ende mit einander gegenüberliegenden Öffnungen endet und die mit einem Linearbetätiger (14) mit einem Bolzen versehen ist, der beim Neigen des oberen Bereichs (104) des Ofens nach oben und Anheben von diesem von der unteren Konstruktion (204) in eine Öffnung (15) in der Stützplatte (9) eingreift, um für eine stabile und sichere Verriegelung der Konstruktion (104) des Ofens in der offenen Stellung zu sorgen, so daß eine Bedienungsperson die anfängliche Positionierung der Bänder entlang dem Ofen vornehmen kann.

12. Vorrichtung nach Anspruch 1,
**dadurch gekennzeichnet,**
**daß** die Bänder (N) veranlaßt werden können, den Ofen (B) in der gegenläufigen Richtung zu der vorstehend betrachteten Richtung zu durchlaufen, d.h. mit einem Eingang von dem vorgenannten Austrittstor (116) und mit einem Ausgang von dem vorgenannten Eintrittstor (16), so daß die Saugeinrichtung der Umwälzgebläse (19, 119) entsprechend dem neuen Eintrittstor (116) für die Bänder angeordnet ist und die heiße Luft in gegenläufiger Richtung über die Bänder strömt.

## Revendications

1. Appareil, adapté au traitement d'étirage de bandes de matière plastiqué extrudée, par exemple de polypropylène et/ou de polyéthylène, pour la production de liens, de raphia ou d'autres types de bandes, du type comprenant un premier groupe (A) de rouleaux de traction motorisés pour l'avance longitudinale de bandes (N) reçues de tout système connu pour l'extrusion, par exemple sur un rouleau refroidi ou dans un réservoir de liquide de refroidissement et avec des moyens de séchage subséquentes, qui comprend un four subséquent (B) où lesdites bandes sont chauffées à la température requise pour qu'elles soient plastifiées et étirées par un second groupe de rouleaux (A') positionné à la sortie dudit four et qui circule à une vitesse supérieure à celle du groupe de traction amont (A), **caractérisé en ce que** le four d'étirage (B) est d'une longueur limitée avec un soufflage d'air chaud à l'intérieur pour la plastification des bandes à étirer, avec de premières embouchures de soufflage opposées (25, 125) disposées à une extrémité de la chambre de traitement (17) dudit four, de préférence près de la porte (16) par laquelle les bandes à traiter entrent, et avec de secondes embouchures de soufflage opposées (27, 127) fonctionnant toujours en flux parallèle, dans une partie intermédiaire de ladite chambre de traitement, laquelle, à l'autre extrémité, à côté de la porte de sortie (116), comporte des paires opposées d'embouchures d'aspiration reliées à des ventilateurs (19, 119) qui rassemblent l'air chaud provenant de ladite chambre de traitement et transportent celui-ci vers lesdites embouchures d'admission (25, 125, 27, 127) via des canaux dans lesquels des unités de chauffage (28, 128, 29, 129) sont disposées, contrôlées sélectivement par des capteurs de température appropriés (30, 31, 130, 131) et par des moyens de régulation et de contrôle appropriés.

2. Appareil selon la revendication 1, dans lequel le four d'étirage (B) est d'une longueur limitée, entre 3000 et 4000 mm, par exemple d'environ 3300 mm et est doté d'une isolation thermique appropriée (32) contre l'extérieur.

3. Appareil selon les revendications précédentes, dans lequel les deux portes d'entrée et de sortie (16, 116) de la chambre de traitement (17) sont identiques et sont alignés l'une avec l'autre, sont plates et horizontales et ont une section transversale rectangulaire, par exemple avec une largeur d' environ 200 mm, une hauteur d'environ 20 mm et une profondeur d'environ 170 mm et la chambre de traitement (17) dans laquelle lesdites portes s'ouvrent est horizontale et pour une longueur d'environ 2150 mm a une largeur d'environ 200 mm et une hauteur d'environ 220 mm et se termine dans une section d'expansion ayant la même largeur que la section amont mais une hauteur supérieure, par exemple d'environ 330 mm, avec la section initiale de ladite chambre (17) attenante à la porte d'entrée (16) avec une structure dotée de parois (117) inclinées à 45°, alors que la section finale, d'une hauteur supérieure, de ladite chambre (17), est attenante à la porte de sortie (116) avec des parois verticales (217).

4. Appareil selon la revendication 3, dans lequel, sur les parois inférieure et supérieure de la section élevée finale de la chambre de traitement (17), dans une position centrée, il existe des ouvertures de fenêtre circulaires (18, 118), attenantes aux embouchures d'aspiration axiales de ventilateurs centrifuges (19, 119) avec des caractéristiques identiques, entraînés par des moteurs (20, 120) à l'extérieur du four et dont la volute s'évacue dans des conduits (21, 121) positionnés au-dessus et au-dessous de la partie initial de la section finale, de hauteur supérieure, de ladite chambre de traitement (17), dans laquelle, grâce auxdits ventilateurs, la quantité correcte d'air peut circuler, par exemple à environ 1500 m³/h.

5. Appareil selon la revendication 4, dans lequel lesdits conduits (21, 121) se rejoignant dans la section de hauteur inférieure de la chambre de traitement (17), avec une hauteur d'environ 215 mm et se divisent ensuite chacun en deux canaux superposés de hauteur sensiblement égale, d'environ 107,5 mm, par des parois de séparation horizontales (22, 122), de marnière à former des paires de canaux longitudinaux mutuellement superposés (23, 24 et 123, 124), dont le premier (23, 123) circule sur toute la longueur du four et se termine dans des sections avec une chicane qui s'ouvre sur les parois d'entrée inclinées (117) de la chambre de traitement, avec des embouchures de soufflage (25, 125) d'environ 200 mm de large et d'environ 40 mm de haut, ayant un angle d'incidence avec l'horizontale d'environ 45° et sur lequel des ailettes peuvent être prévues facultativement, dont l'orientation est éventuellement réglable, de sorte que l'air évacué par lesdites embouchures, avec une vitesse d'environ 30-35 m/s, lorsque le four fonctionne dans des conditions normales, n'aura pas tendance à créer des effets de remous à la porte d'entrée (16), mais devra peut-être forcer un peu d'air de l'intérieur vers l'extérieur par ladite porte (16), étant envisagé que les autres canaux (24, 124) soient plues courts que les canaux externes susmentionnés (23, 123) et se terminent dans des embouchures (27, 127) sensiblement commue une chicane, s'ouvrant également à l'intérieur de la chambre de traitement (17) avec un angle d'incidence avec l'horizontale d'environ 45°, ayant la même taille que les embouchures amont (25, 125) et à environ 1125 mm de distance de celles-ci, la distance entre lesdites embouchures intermédiaires et les embouchures d'aspiration des ventilateurs (19, 119) étant d'environ 1560 mm.

6. Appareil selon la revendication 5, dans lequel, dans la section intermédiaire desdits canaux externes (23, 123), la section entre les paires d'embouchures de soufflage (25, 27 et 125, 127), des batteries de résistances chauffantes électriques protégées (28, 128), avec des caractéristiques identiques, sont prévues, où chaque batterie comprend par exemple trois résistances électriques protégées en forme de U, avec des ailettes externes, avec une largeur entre les axes d'environ 75 mm, positionnées transversalement et avec l'inclinaison correcte dans lesdits canaux, chacune ayant par exemple une puissance d'environ 1200 W et étant espacée d'environ 120 mm, des batteries de résistances électriques (29, 129) identiques étant disposées dans la partie initiale des canaux internes (24, 124) et des capteurs de température respectifs (30, 31 et 130, 131) étant prévus en aval de chacune desdites batteries de résistances, et reliés à des moyens, non représentés, grâce auxquels il est possible de contrôler et de réguler, sélectivement et automatiquement, le fonctionnement desdites batteries de résistances électriques, pour que la température requise pour étirer les bandes à produire soit établie dans la chambre de traitement (17).

7. Appareil selon les revendication précédentes, **caractérisé en ce que** lorsque l'on travaille avec des bandes de petite taille, par exemple pour produire du raphia, lesdites bandes peuvent être avancées à travers le four susmentionné (B) à une vitesse d'environ 300 m/min et peuvent subir un étirage moyen d'environ 1- 9, 1-10, et cela grâce à l'injection de chaleur qui est réalisé non seulement via les embouchures de soufflage de l'entrée (25, 125), mais également via les embouchures de soufflage intermédiaires (27, 127), soumettant les bandes à un traitement thermique distribué uniformément qui assure leur réaction optimale à l'étirage, même sur un trajet de longueur limitée, dans le cas précis d'environ 3500 mm de long.

8. Appareil selon les revendications précédentes, dans lequel les batteries chauffantes intermédiaires (29, 129) sont dans une position telle qu'elles peuvent également préchauffeur, par conduction et par rayonnement, l'air qui circule à travers les canaux externes et attenants (23, 123) ainsi que l'air qui circule dans la partie d'extrémité de la chambre de traitement (17).

9. Appareil selon les revendications précédentes, **caractérisé en ce que**, selon un mode de réalisation de conception, les batteries chauffantes (28, 128) des canaux externes (23, 123) peuvent également être utilisées pour céder une meilleure partie de leur chaleur à la chambre de traitement (17), si elles sont disposées dans une position plus proche de la paroi inférieure et de la paroi supérieure de ladite chambre.

10. Appareil selon les revendications précédentes, **caractérisé en ce que**, à travers des ouvertures latérales appropriées prévues dans les côtés du four (B), il est possible de positionner, transversalement dans la chambre de traitement (17) dudit four, des rouleaux (33, 34 ou 35, 36, ou 35, 36, 136, 135) partiellement fixés et partiellement motorisés ou tous motorisés à la vitesse correcte, sur lesquels les bandes à étirer sont propulsées, de manière à ce qu'elles suivent un trajet brisé ou en zigzag à l'intérieur du four, d'une longueur supérieure à la longueur du four lui-même, afin de subir le traitement thermique requis pour l'étirage même lorsque lesdites bandes sont d'une section large, par exemple pour la production de liens.

11. Appareil selon une ou plusieurs des revendications précédentes, **caractérisé en ce que** le four (B) comprend une structure (4) de forme parallélépipédique, avec une isolation appropriée (32) contre l'extérieur, avec les zones de coin d'extrémité (5) convenablement arrondies et formées par la superposition de deux structures qui sont de forme parallélépipédique et sensiblement spéculaire (104, 204) articulées ensemble comme un livre sur un côté longitudinal par des moyens d'articulation appropriés (6), et, desdites structures, la structure inférieure (204) est fixée sur une base (7), alors que la structure supérieure (104) est dotée, dans la partie du milieu de la paroi avec une articulation (6) au niveau de la partie inférieure, d'une plaque de renforcement (8) sur laquelle un gousset triangulaire (9) est fixé par cisaillement, articulé avec le somment inférieur (10) à la tige d'un actionneur linéaire (11) avec son corps fixé à une colonne (12) qui est à son tour fixée à une saillie latéral inférieure (107) de ladite base (7), et une colonne (13) est également fixée à ladite saillie, se terminant dans une extrémité supérieure fourchue et avec des trous opposés, dotée d'un actionneur linéaire (14) avec un boulon qui, lorsque la partie supérieure (104) du four est inclinée vers le haut et est élevée depuis la structure inférieure (204), s'engage dans un trou (15) dans ledit gousset (9), de manière à permettre une verrouillage stable et sûr de ladite structure (104) du four dans la position ouverte qui permet à l'opérateur de réaliser le positionnement initial des bandes le long dudit four.

12. Appareil selon la revendication 1, **caractérisé en ce que** les bandes (N) peuvent être amenées à traverser le four (B) dans la direction opposée à celle considérée précédemment, c'est-à-dire en entrant par la porte de sortie susmentionné (116) et en sortant par la porte d'entrée susmentionnée (16), de sorte que l'aspiration des ventilateurs de circulation (19, 119) soit disposée pour correspondre à la nouvelle porte d'entrée (116) pour les bandes et de sorte que lesdites bandes aient de l'air chaud circulant sur elles en contre-courant.
